# EUROPEAN PATENT APPLICATION

(11) **EP 1 096 445 A2**
(43) Date of publication of application: **02.05.2001**
(21) Application number: 00203755.4
(22) Date of filing: 30.10.2000
(51) Int. Cl.: G07F 19/00

(54) **Method and system for installing and/or upgrading software on a self-service financial transaction terminal from a remote computer**

(30) Priority: 01.11.1999 US 163002; 01.11.1999 US 162815
(71) Applicant: Citicorp Development Center, Inc., Los Angeles, California 90066 (US)
(72) Inventor: Klinedinst, John, Simi Valley, California 93063 (US); Christensen, Palle Thy, Culver City, California 90230 (US)
(74) Representative: Hynell, Magnus

(57) **Abstract**

Methods and systems for installing and/or upgrading software on a self-service financial transaction terminal (e.g., an ATM) from a remote computer is provided. A transaction terminal receives a software update sent to it by a remote computer via a network. The software update comprises update data for a software program executing in a primary directory of the transaction terminal. The software update is recorded in a secondary directory. On receipt of an activation signal form the remote computer, the transaction terminal reboots and swaps the primary directory and the secondary directory, and executes the software now in the primary directory, which includes the software update.

## Description

### PRIORITY APPLICATIONS

This patent application claims priority to co-pending US Provisional Application Serial No. 60/163,002, entitled "Method and System for Installing And/Or Upgrading Software on a Self-Service Financial Transaction Terminal From a Remote Computer (Remote Installation / Software Upgrade)," filed November 1, 1999, and is incorporated herein by reference.

This patent application claims priority to co-pending US Provisional Application Serial No. 60/162,815, entitled "Method And System For Simultaneous And Unattended Installation Of Software On A Self-Service Financial Transaction Terminal (Global Installation Framework)," filed November 1, 1999, and is incorporated herein by reference.

### CROSS REFERENCE TO RELATED PATENT APPLICATIONS

This application relates to Attorney Docket No. CITI0198/T0091-195417, filed simultaneously, entitled "Method And System For Secure Communication Between A Self-Service Financial Transaction Terminal And A Remote Operator Interface," and is incorporated herein by reference.

This application relates to Attorney Docket No. CITI0197/T0091-195418, filed simultaneously, entitled "Method and System For Obtaining Device Services On A Self-Service Financial Transaction Terminal," and is incorporated herein by reference.

This application relates to Attorney Docket No. CITI0202,T0091-195420, filed simultaneously, entitled "Method And System For Simultaneous And Unattended Installation Of Software On A Self-Service Financial Transaction Terminal," and is incorporated herein by reference.

This application relates to Attorney Docket No. CITI0199/T0091-195421, filed simultaneously, "Method And System For Remote Operator Interface With A Self-Service Financial Transaction Terminal," and is incorporated herein by reference.

This application relates to Attorney Docket No. CITI201/T0091-195422, filed simultaneously, entitled "Method And System For Coordinating Session Activities At A Self-Service Financial Transaction Terminal," and is incorporated herein by reference.

This application relates to Attorney Docket No. CITI0203/T0091-195578, filed simultaneously, entitled "Method And System For Configuration Of Self-Service Financial Transaction Terminals For A Common Software Release," and is incorporated herein by reference.

This application relates to US Provisional Application No. 60/162,673, filed November 1, 1999, entitled "Method And System For Secure Communication Between A Self-Service Transaction Terminal And A Remote Operator Interface (Remote Operator Interface Security)," and is incorporated herein by reference.

This application relates to US Provisional Application No. 60/162,994, filed November 1, 1999, entitled "Method And System For Extensions For Financial Services Service Provider Framework For A Self-Service Transaction Terminal (XFS Service Provider Framework)," and is incorporated herein by reference.

This application relates to US Provisional Application Serial No. 60/163,000, filed November 1, 1999, entitled "Method and System of Remote Operator Interface For A Self-Service Financial Terminal (Remote Operator Interface)," and is incorporated herein by reference.

This application relates to US Provisional Application Serial No. 60/162,816 filed November 1, 1999, entitled "Method And System For Coordinating Session Activities At A Self-Service Financial Transaction Terminal (ATM Session Manager)," and is incorporated herein by reference.

This application relates to US Provisional Application No. 60/162,672, filed November 1, 1999, entitled "Method And System For Configuration Of Self-Service Financial Terminals For A Common Software Release (Framework for Configuration of Self-Service Financial Terminals)," and is incorporated herein by reference.

### COPYRIGHT NOTIFICATION

A portion of the disclosure of this patent document and its figures contain material that is subject to copyright protection. The copyright owner has no objection to the facsimile reproduction by anyone of the patent document or the patent disclosure, as it appears in the Patent and Trademark Office patent files or records, but otherwise reserves all copyrights whatsoever.

### BACKGROUND OF THE INVENTION

### 1. Field of the Invention

The present invention relates generally to the field of self-service financial transaction terminals, such as automated teller machines (ATMs). More particularly, embodiments of the present invention relate to a method and system for installing and/or upgrading software releases on the processor of an ATM from a remote computer.

### 2. Background

Conventional Automated Teller Machines (ATMs) comprise at least one processor that executes computer software (or applications) stored in the ATM's memory system (e.g., a hard disk drive) for carrying out the operations of the ATM. For example, conventional ATMs execute programs that display interface screens on the ATM's touch screen. Conventional ATMs also execute programs that allow the ATM to interface with a host computer and other remote computers connected with the ATM over a network. Before an ATM is deployed, operational software is installed in the ATM. From time to time, it is necessary to upgrade or replace all or part of the operational software in the ATM.

Conventionally, when an ATM is to be deployed, for example, by a financial institution, such as a bank, it is necessary for the financial institution to send a technical representative to perform local installation of the software in the ATM. It may likewise be necessary for the financial institution to send a technical representative to perform a local upgrade of the software on the ATM from time to time.

ATMs are typically located at local branches of the financial institution. Thus, to carry out software upgrades at an ATM, the technical representative must often travel a considerable distance. There is a substantial cost to the financial institution for the time and travel expense associated with locally installing and/or upgrading software releases on the ATM machines.

There is a need for methods and systems for installing and/or upgrading software on a self-service financial transaction terminal, such as an ATM, from a remote computer.

### SUMMARY OF THE INVENTION

Embodiments of the present invention provide methods and systems for installing and/or upgrading software on a self-service financial transaction terminal, such as an ATM, from a remote computer. An embodiment provides a method for installing software, e.g., an operating system or a software upgrade, in an automated teller machine (ATM) computer system. The system comprises a primary directory having a first software program. A remote terminal sends a software update comprising data for the first software program to the ATM computer system via a network. The ATM computer system records the software update in a secondary directory of the ATM computer system and verifies delivery of the software update. Verification of delivery of the software update may be accomplished by various methods, including providing check bits in the software update or providing a verification file.

The ATM computer system then receives an activation signal and reboot signal from the remote computer and reboots. On reboot, the ATM computer system swaps the primary directory and the secondary directory, thereby causing the software update to become the operational software for the ATM computer system, and configures the software update as comprising operating software for the ATM computer system. The software update is then tested according to pre-defined parameters and, if the software update does not meet the pre-defined parameters, the primary and secondary directories can be swapped again such that the first software program comprises the operating software for the ATM computer system. Installation tools, such as installation scripts and configuration files, are sent to the ATM computer system by the remote computer to assist in the installation and configuration of the software update.

The method of swapping may be carried out in any one of a variety of ways. In an embodiment, the method of software upgrade may be carried out in one of two ways: 1) a full upgrade contains all files for a particular software component, and all the files are downloaded from a remote site to the ATM; or 2) an incremental upgrade contains only the files that have changed (compared to the currently running version of that software component).

It is a feature and advantage of the present invention to provide a method and system for installing and/or upgrading software releases on an ATM from a remote computer connected to the ATM. It is another feature and advantage of the present invention to provide a method and system for installing and/or upgrading operating systems on the ATM from the remote computer. It is a further feature and advantage of the present invention to provide a method and system for installing and/or upgrading software releases on the ATM from the remote computer, which eliminates the need to send technical representatives out to each branch to the ATM to do a local installation and/or upgrade.

It is an additional feature and advantage of the present invention to provide a method and system for upgrading software releases on the ATM machine from the remote computer, which enables customers to continue to use the ATM during download. It is still another feature and advantage of the present invention to provide a method and system for installing and/or upgrading software releases on the ATM from the remote computer, which allows for fall back to the previous running software if an error is discovered in the newly-installed software,

It is a still further feature and advantage of the present invention to provide a method and system for installing and/or upgrading software releases on the ATM from the remote computer, which enables installation of one release or a number of releases at the same time.

Additional objects, advantages and novel features of the invention will be set forth in part in the description which follows, and in part will become more apparent to those skilled in the art upon examination of the following, or may be learned by practice of the invention.

### BRIEF DESCRIPTION OF THE FIGURES

FIG. 1 shows a block diagram of an embodiment of a system according to the present invention.
FIG. 2 shows a flow diagram of an embodiment of a method according to the present invention carried out in the system of FIG. 1.
FIG. 3 shows a representation of an embodiment of a method according to the present invention.

### DETAILED DESCRIPTION

Embodiments of the present invention include methods and systems for installing software updates in a financial transaction terminal, such as an automated teller machine (ATM) computer system. One such embodiment comprises a method and system for installing a software update in an ATM that is received by the ATM from a remote computer by providing a directory for the update and swapping the directory with the directory containing the operating software for updating.

A variety of software releases may be used in association with embodiments of the present invention, such as embodiments in association with new full versions or with incremental updates. For example, embodiments may be used to upgrade an operating system (e.g., the Microsoft Windows NT operating system) or to install additional components and tools associated with a software package (e.g., the Microsoft Windows NT Service Packs). Embodiments may be used to provide a completely new version of the software to use that will replace the entire previous version or to provide updates that replace only part of the previous version.

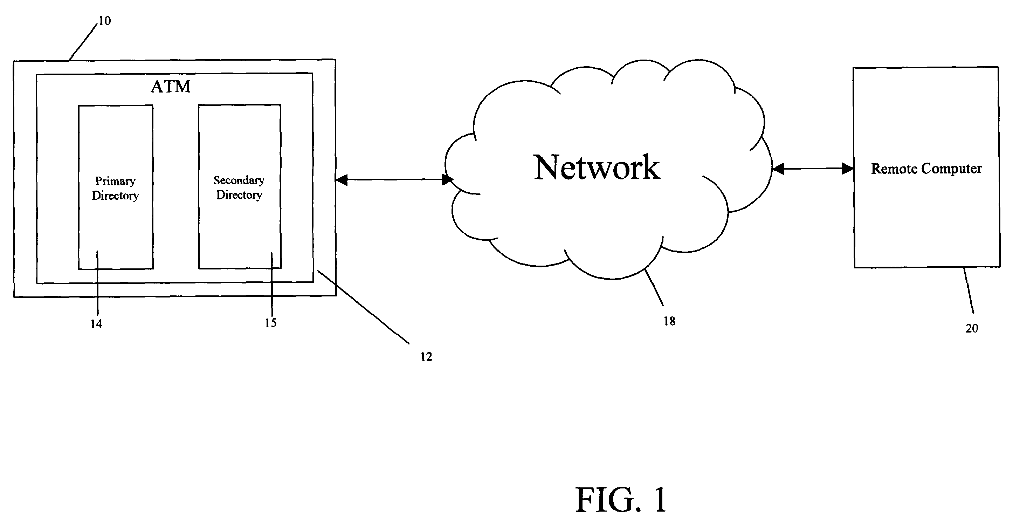

FIG. 1 shows a system according to the present invention. Referring to FIG. 1, an ATM 10 is shown. The ATM 10 includes an ATM computer system 12. The ATM computer system 12 comprises memory system (e.g., a hard disk drive) and a processor. The processor executes software that operates the ATM 10. For example, such software manages the ATM screen display and interfaces with computers, such as the remote computer 20, that are connected to the ATM over the private network 18 shown. The memory system comprises a primary directory (or folder, or partition) 14 and a secondary directory (or folder) 16. The software that does the upgrade executes (or runs) on the processor or PC that is associated with the ATM 10.

The ATM 10 is in communication with an ATM network 18 and receives data from the network 18. A remote computer 20 is also connected to the ATM network 20. In the embodiment shown in FIG. 1, the ATM 10, the remote computer 20, and the network 18 are operated by a single entity, a bank. The ATM 10 is located at a branch bank of the bank and is geographically distant from the remote computer 20 (such ATMs may also be located at a supermarket, airport, retail store, or other location).

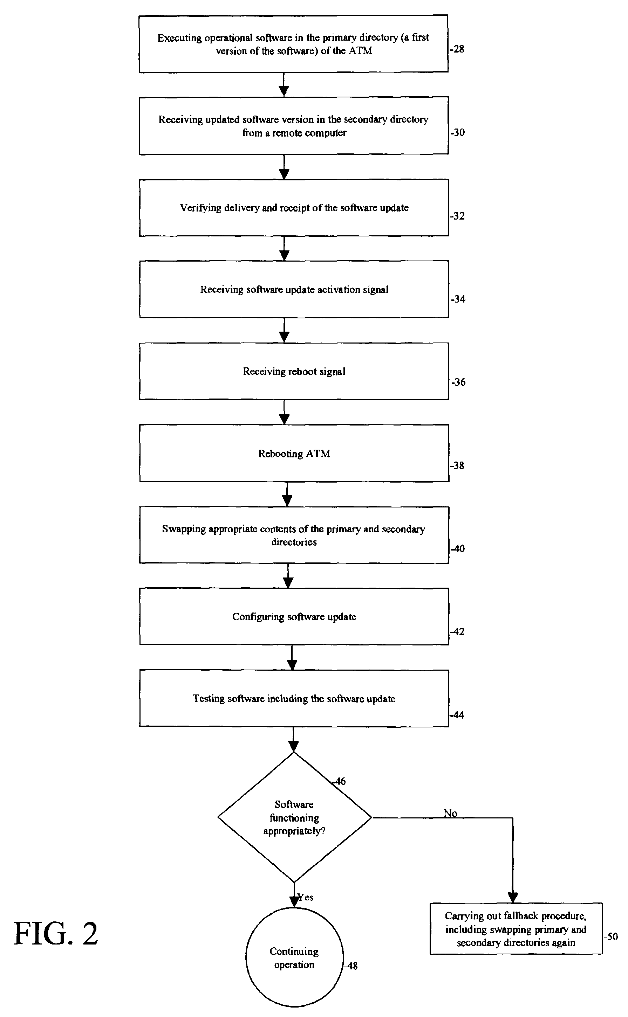

The ATM 10 employs a software program in the primary directory 14 to carry out its functions, e.g., managing withdrawals, balance inquiries, and like transactions. This program is carried out using the processor in the ATM 10. The memory in the ATM 10 also includes software to carry out the functions shown in FIG. 2, and the processor of the ATM executes such software such that such functions are carried out in the ATM 10.

FIG. 2 shows a flow diagram of an embodiment of a method according to the present invention carried out in the system of FIG. 1. At the beginning of the process, the ATM 10 is executing (or running) operational software in the primary directory (a first version of the software) 28. Also, at the beginning of the process, the remote computer 20 comprises an updated version of the operational software running on the ATM 10 (i.e., a second, or updated, version of the software).

The remote computer 20 sends the updated software version to the ATM 10 via the network 18. The updated software version comprises data making up the updated version. The ATM 10 receives the updated software version and records in the secondary directory 30. The ATM 10 also receives installation scripts, configuration files, file listings, and other installation tools associated with the installation of the software update from the remote computer 20. These tools are recorded by the ATM 10 as well. In the embodiment shown, the installation tools received from the remote computer 20 comprise an update configuration indicating the names of the files in the software version in the primary directory that are to be replaced with files in the software update now in the secondary directory. In the embodiment shown, the software update comprises a completely new version of the software to use that will replace the entire software package running in the primary directory.

Next, the delivery / receipt of the software update is verified 32. In the embodiment shown, the delivery / receipt of the software update is verified by the remote computer 20 sending a verification file comprising a list of files that should be in the software update received, as well as the size of each file (in bytes). The ATM 10 receives the verification file and compares the list included in the verification file with the files in the secondary directory 30. If the list in the verification file and the files found in the secondary directory match, the delivery is verified. If the list does not match, the ATM 10 signals the remote computer 20 that verification cannot be completed and the remote computer sends the software update again. In other embodiments, verification is accomplished by using check bits within the software update.

The ATM 10 carries out any customization of the software release that the ATM determines is necessary. For example, the ATM 10 executes a program that examines the filenames of the software update. In some embodiments, original file names are shortened when installing a software update. If the ATM 10 detects that the original or "long" version of the file names are not in use, the ATM 10 restores the original, or "long," file names to the files in the software update.

In an embodiment, once the receipt of the software update is verified, the remote computer 20 sends an activation signal to the ATM 10 via the network 18. The activation signal comprises data that will cause the ATM 10 to activate the software update. In the present embodiment, the remote computer 20 sends the activation signal on manual command of an operator of the remote computer 20. In other embodiments, the activation signal is sent automatically after the ATM 10 sends a signal to the remote computer 20 indicating verification of the delivery / receipt of the software update. In still other embodiments, the activation signal is sent automatically at a pre-determined time (e.g., at 3:00am local time to the ATM 10) or in a pre-determined amount of time after the software update transmittal is completed.

The ATM 10 receives the activation signal 34. The ATM 10 is programmed to undertake a defined program once an activation signal is received.

After receipt of the activation signal, the ATM 10 prepares itself to install the software update. For example, the ATM 10 alters the startup routine of the ATM 10 (the routine carried out on reboot) to include a command invoking a directory swap procedure in the ATM 10 and alters other files (e.g., installation and configuration files) to include installation task commands, and preparation is made for swapping the directories the next time that the system is rebooted.

Next, the ATM 10 receives a reboot signal 36. The reboot signal may come from an operator local to the ATM 10, from the remote computer 20, or comprise an automatic signal provided by the ATM 10 on receiving and verifying the receipt of a new software update. In the embodiment shown, the reboot signal is transmitted by the remote computer 20 to the ATM 10 via the network 18.

In the embodiment shown, the primary and secondary directories are swapped, but they are not swapped while software is executing in the primary directory. In the embodiment shown, during the downloading of the software update from the remote computer 20 by the ATM 10, customers may still use the ATM 10. The software update is recorded in the secondary directory, but the operational aspects of the software in the primary directory is not disturbed during the downloading and recordation. Thus, customers may continue carrying out transactions using the ATM 10, such as withdrawing cash and making deposits, may continue using the ATM 10 operating under the software in the primary directory. It is only during the cut over that the customer cannot use the ATM computer, since the ATM is still running the old software during the download process of the new software.

When the ATM 10 receives the reboot signal, the ATM 10 reboots. When the ATM 10 reboots, it carries out its reboot process, which includes carrying out its initiation and startup procedures. As discussed above, the ATM 10 previously adjusted its startup and installation procedures to include commands to carry out and assist in the installation of the software update in the secondary directory.

Next, the appropriate contents of the primary and secondary directories are swapped 40. In an embodiment, the entire contents of the primary directory is swapped with the entire contents of the secondary directory such that the contents of the secondary directory becomes the contents of the primary directory, and vice versa. In such an embodiment, a directory renaming procedure may be used. For example, the primary directory is renamed to a temporary name (e.g., "Temporary"), the secondary directory is then renamed to the primary directory name, and the temporary directory is renamed to the secondary directory name, thus resulting in swapped directories.

In the embodiment shown, the system is replacing the software package running in the primary directory with the software update now in the secondary directory. Thus, in the embodiment shown in FIG. 2, the entire contests of the primary directory is swapped with the entire contents of the secondary directory.

In other embodiments, when an incremental software release is received for installation, the files contained in the pre-swapping primary directory are copied to the secondary directory, as is the software release, Then, the software release is distributed to the secondary directory, thus updating the copy of the software in the secondary directory. Afterwards, the contents of the primary and secondary directories are swapped.

Swapping may be carried out using a variety of procedures. For example, in an en embodiment, a temporary directory is created and the contents of the primary directory is moved to the temporary directory. Then, the contents of the secondary directory is moved to the primary directory and the contents of the temporary directory is then moved to the secondary directory. In the embodiment shown, as described above, the directories themselves may be renamed. For example, the pre-swapping primary directory may be renamed to the secondary directory and the pre-swapping secondary directory renamed to the primary directory.

The ATM 10 also executes a configuration program for the software update 42. The configuration program carries out any remaining necessary tasks to prepare the ATM to execute the software update. For example, the configuration program may update driver pointers, create new sub-directories that may be used by the software update, and related tasks. In an embodiment, the ATM 10 receives an installation file from the remote computer 20 comprising an indication of configuration tasks to execute. The ATM 10 reads this installation file during the post-reboot configuration process and carries out the listed tasks.

Next, the ATM 10 tests the software package (comprising the software update) now present in the primary directory and configured for execution. The ATM 10 tests the software package to determine if the updated software is functioning and functioning according to pre-selected standards (e.g., response time is appropriate, the software carries out appropriate tasks, and does not contain bugs). If it is determined that the software package in the primary directory is not functioning or is not functioning according to pre-selected standards, a fallback procedure is carried out 50. This determination may be made manually by a person on-site, by an inquiry by the remote computer, automatically by the ATM 10, or other method. In the embodiment shown, the determination is made manually by a person on site. In an embodiment, the fallback or re-swap command is given by the remote computer.

The fallback procedure results in the original contents of the primary directory reconstituted as the operational software package for the ATM 10. In an embodiment, the ATM 10 records the procedures carried out to install and configure the software update in a manner that allows the ATM 10 to uninstall or to reverse the installation such that the original contents (pre-swapping) of the primary directory are returned to the primary directory and the original contents (pre-swapping) of the secondary directory are returned to the secondary directory. In the embodiment shown, since the entire contents of the pre-swapping primary directory was swapped with the entire contents of the pre-swapping secondary directory, that process is carried out again, with the ATM swapping the post-swapping contents of the primary and secondary directories.

If the ATM 10 determines that the software package in the primary directory is functioning as desired, the installation procedure is complete and the ATM 10 carries out its operational activity using the software update 48.

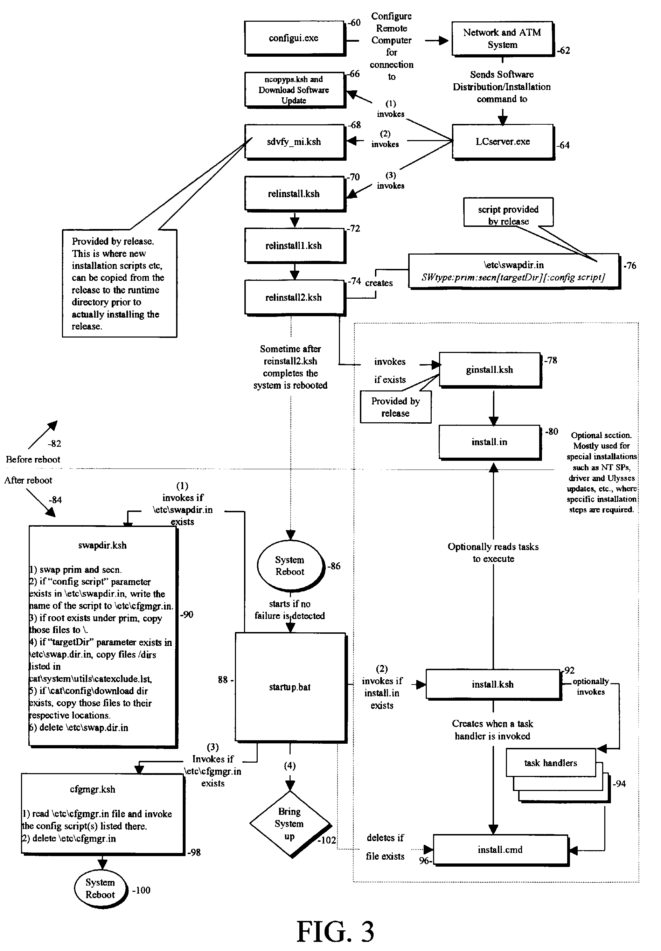

FIG. 3 shows an example embodiment of a process according to the present invention. Specifically, FIG. 3 shows an embodiment of the activation and configuration of the software update received by the ATM 10 from the remote computer 20. Note that FIG. 3 refers to the invocation or use of specific file names, but one of ordinary skill in the art will recognize that the reference to a specific file name indicates the process undertaken rather than a requirement to use a specific file name in a particular embodiment. Further, those of ordinary skill in the art will recognize that there are a variety of executable and shell files that may be invoked to assist in the configuration of the activation and configuration of the software update, and that the embodiment in FIG. 3 is shown by way of example.

Referring to FIG. 3, after the software update for installation has been received by the ATM 10 and verified, the update is activated, configured, and installed in the primary directory. In the embodiment shown in FIG. 3, like the embodiment shown in FIG. 2, the process begins with ATM 10 carrying out the execution of the software in the primary directory in the normal course of ATM 10 operations. The remote computer 20 interfaces with the ATM 10 via the network 18 to facilitate activation, configuration, and installation.

As shown in FIG. 3, when an operator of the remote computer 20 initiates a remote software installation procedure for an ATM 10 specified by the operator, the remote computer 20 which is connected to the specified ATM 60, then communicates to the specific ATM 10 that a remote installation is to take place 62. An executable program that assists in managing the installation process in the ATM 110, labeled LCServer.exe in FIG. 3, receives the communication from the remote computer 64. Once the executable program receives the communication that a remote installation is to take place, the program invokes the ncopyps.ksh shell (or program) 66. If the installation is to be an incremental upgrade, the ncopyps.ksh shell carries out the copying of all files from the primary directory to the secondary directory (because the incremental upgrade includes only a sub-set of the files in the software to be upgraded). Then, the LCServer.exe executable file facilitates the receipt of the software update files by the ATM 10 from the remote computer 20, and the software update files are copied into the secondary directory on the ATM 66.

Then, the executable program invokes the sdvfy_mi.ksh shell 68. The sdvfy_mi.ksh shell detects that the original or "long" version of the file names have been changed 8.3 naming-standard format in the software update files received from the remote computer 20 and restores the original, or "long," file names to the files. At this time, the new, or updated files replace the previous, corresponding versions of those files in the secondary directory. Thus, at this point in the process, the software update files have been sent from the remote computer 20 to the ATM 10, received by the ATM 10 and placed in the secondary directory along with a copy of the previous (or currently-running) version, the long names of the files have been restored, and the new files have replaced the corresponding old files in the secondary directory. The LCServer.exe then waits for an installation command from the remote computer 20.

After some time, when an operator at the remote computer 20 invokes the install command, an installation command (or signal) is sent from the remote computer 20 to the ATM 10 (in embodiments not shown, the installation command may be sent automatically from the remote computer, provided manually at the ATM, provided automatically by the ATM, or by another means). The LCserver.exe executable file detects the receipt of the command and carries out installation preparation for the software update. The executable file invokes an installation shell, the relinstall.ksh shell 70, which in turn invokes other installation shells, relinstall1.ksh 72 and relinstall2.ksh 74. In the embodiment shown, the installation shell reinstall2.ksh creates an installation file, swapdir.in, which includes the information to swap the primary and secondary directories. Optionally, the swapdir.in may also include configuration script information in the software update used in carrying out the swap 76. On reboot, the ATM system 10 will invoke the startup.bat batch file, which will look for and invoke the swapdir.in command if it is present.

The same installation shell, reinstall2.ksh, determines if a custom installation shell was provided in the software update and, if so, invokes the custom installation shell provided by the software update 78. The custom installation shell provided by the software update provides custom installation tasks to an installation file, install.in 80. Such special installation tasks are used in situations in which specific installation steps are required by the update. In the embodiment shown, custom installation shells provided in the software update are invoked by the relinstall.ksh shells 70, 72, 74 before the ATM system 10 is rebooted. In addition, the custom installation shell provides custom procedures or actions to be carried out after reboot in the install.in file 80. In the embodiment shown, the install.in file is invoked by the ATM system 10 after reboot and swap. For example, the post-reboot custom action procedure may be used to update an operating system.

In the embodiment shown in FIG. 3, the steps described above in relation to items 60-80 are carried out before the ATM 10 is rebooted 82. After the reinstall2.ksh shell completes its processing, the ATM 10 is rebooted 86. As mentioned above, in embodiments, the rebooting of the ATM 10 is carried out manually by an operator of the ATM 10. In other embodiments, the rebooting is carried out automatically or by command of the remote computer 20.

On reboot, the ATM 10 determines if any system failures are present and, if not, the ATM 10 invokes the startup.bat file 88. As mentioned above, the startup.bat file determines if the swapdir.in file is present (as it is in the present embodiment) and invokes the file, which is a command to swap the primary and secondary directories 90. The primary and secondary directories are swapped using the directory-rename method described above. The startup.bat file also invokes an installation shell program 92 that examines the install.in installation file previously created 80 to determine if the file includes installation tasks to be carried out 92. If so, the installation shell creates installation a command file 96 and invokes task handler programs 94 to carry out such tasks 94. Once the task handler programs complete a designated task, the corresponding command file is deleted 94.

The startup.bat file also invokes a configuration shell program 98, which completes the configuration for the software update. Once the configuration shell program 98 has completed its process, the ATM system reboots 100. Thus, the updated version of the software now resides in the primary directory. The ATM 10 is then ready to be accessed by users with the software update installed 102.

An embodiment of the present invention makes use, for example, of a number of different releases, such as fourteen or fifteen different software releases. The remote installation and/or upgrade method and system for an embodiment of the present invention can install one release or a number of releases at the same time. Further, the remote installation and/or upgrade method and system disclosed herein may be used in association with multiple ATMs at the same time.

In the embodiment shown, the ATM 10 and the remote computer 20 are in the United States. The ATM 10 is located at a branch bank. The method and system for an embodiment of the present invention can be used worldwide. In an embodiment, the ATM 10 is located in a country besides the United States and the remote computer 20 is located in the United States.

In the embodiment described above, the self-service financial terminal is an ATM. In other embodiments, other self-service financial transaction terminals are employed in the place of an ATM. For example, the methods and systems described may be employed in an embodiment wherein the self-service financial terminal is an home banking terminal, a staff terminal used within a financial institution, or an electronics communications device (e.g., a personal computer, screen telephone, personal data assistant, or interactive television).

Various embodiments of the invention have been described in fulfillment of the various objects of the invention. It should be recognized that these embodiments are merely illustrative of the principles of the present invention. Numerous modifications and adaptations thereof will be apparent to those skilled in the art without departing from the spirit and scope of the present invention.

## Claims

1. A method for installing software in a financial transaction terminal computer system, wherein the system comprises a primary directory having a first software program, comprising:
receiving a software update comprising update data for the first software program from a remote computer;
recording the software update in a secondary directory of the financial transaction terminal computer system;
verifying delivery of the software update;
receiving an activation signal from the remote computer;
receiving a reboot signal;
rebooting the financial transaction terminal computer system;
swapping the primary directory and the secondary directory;
configuring the software update as comprising operating software for the financial transaction terminal computer system;
testing the software update according to pie-defined parameters; and
if the software update does not meet the pre-defined parameters, swapping the primary and secondary directory such that the first software program comprises the operating software for the financial transaction terminal computer system.

2. The method of claim 1 wherein the software update comprises at least one of the following: an operating system and a new software version.

3. The method of claim 2 further comprising receiving installation data associated with the software update.

4. The method of claim 3 wherein the installation data comprises at least one of the following: installation script and configuration file.

5. The method of claim 4 wherein verifying delivery of the software update comprises at least one of the following providing check bits in the software update and providing a verification file.

6. The method of claim 5 wherein rebooting the financial transaction terminal computer system comprises rebooting the financial transaction terminal computer system after the activation signal is received by the financial transaction terminal computer system.

7. The method of claim 6 wherein swapping the primary directory and the secondary directory comprises one of the following: (a) changing the name of the secondary directory from a first directory name to a first temporary directory name, changing the name of the primary directory from a second directory name to the first directory name, and changing the first temporary directory name to the second directory name, and (b) changing the name of the primary directory from a third directory name to a second temporary directory name, changing the name of the secondary directory from a fourth directory name to the third directory name, and changing the second temporary directory name to the fourth directory name.

8. The method of claim 7 wherein the financial transaction terminal comprises an automated teller machine (ATM).

9. The method of claim 7 wherein the financial transaction terminal comprises a home banking terminal.

10. The method of claim 7 wherein the financial transaction terminal comprises a staff terminal used within a financial institution.

11. The method of claim 7 wherein the financial transaction terminal comprises a staff terminal used within an electronic communications device.

12. The method of claim 11 wherein the electronic communications device comprises at least one of the following: a personal computer, a screen telephone, a personal data assistant, and an interactive television.

13. A method for installing software releases on a target computer system associated with a financial transaction terminal from a remote computer, the method comprising:
interfacing the target computer system from the remote computer, wherein the target computer system comprises a primary directory and a secondary directory;
delivering a software release to the secondary directory on the target computer system;
verifying that the software release was accurately delivered to the secondary directory;
customizing the delivered software release in the secondary directory;
swapping the delivered software release in the secondary directory with an existing software version in the primary directory when the target computer system is rebooted; and
executing a configuration program for the software release.

14. The method of claim 10 wherein the financial transaction terminal comprises an automated teller machine (ATM).

15. The method of claim 14 wherein interfacing the target computer system from the remote computer comprises establishing communication with the target computer system via a network.

16. The method of claim 15 wherein delivering a software release to the secondary directory on the target computer system comprises recording the software release in the secondary directory.

17. The method of claim 16 wherein the software release comprises one of the following: an operating system and software upgrade.

18. A system for installing software in a financial transaction terminal computer system, comprising:
a primary directory having a first software program;
a means for receiving a software update comprising update data for the first software program from a remote computer;
a means for recording the software update in a secondary directory of the financial transaction terminal computer system;
a means for verifying delivery of the software update;
a means for receiving an activation signal from the remote computer;
receiving a reboot signal;
a means for rebooting the financial transaction terminal computer system;
swapping the primary directory and the secondary directory;
a means for configuring the software update as comprising operating software for the financial transaction terminal computer system;
a means for testing the software update according to pre-defined parameters; and
a means for swapping the primary and secondary directory if the software update does not meet the pre-defined parameters such that the first software program comprises the operating software for the financial transaction terminal computer system.

19. The system of claim 18 wherein the software update comprises at least one of the following: an operating system and a software upgrade.

20. The system of claim 19 further comprising means for receiving installation data associated with the software update.

21. The system of claim 20 wherein the installation data comprises at least one of the following: installation script and configuration file.

22. The system of claim 21 wherein the means for verifying delivery of the software update comprises at least one of the following means for providing check bits in the software update and means for providing a verification file.

23. The system of claim 22 wherein means for rebooting the financial transaction terminal computer system comprises means for rebooting the financial transaction terminal computer system after the activation signal is received by the financial transaction terminal computer system.

24. The system of claim 23 wherein the means for swapping the primary directory and the secondary directory comprises at least one of the following (a) means for changing the name of the secondary directory from a first directory name to a first temporary directory name, changing the name of the primary directory from a second directory name to the first directory name, and changing the first temporary directory name to the second directory name, and (b) means for changing the name of the primary directory from a third directory name to a second temporary directory name, changing the name of the secondary directory from a fourth directory name to the third directory name, and changing the second temporary directory name to the fourth directory name.

25. The system of claim 24 wherein the financial transaction terminal comprises an automated teller machine (ATM).

26. The system of claim 24 wherein the financial transaction terminal comprises a home banking terminal.

27. The system of claim 24 wherein the financial transaction terminal comprises a staff terminal used within a financial institution.

28. The system of claim 24 wherein the financial transaction terminal comprises a staff terminal used within an electronic communications device.

29. The system of claim 28 wherein the electronic communications device comprises at least one of the following: a personal computer, a screen telephone, a personal data assistant, and an interactive television.

30. A system for installing software releases on a target computer system associated with a financial transaction terminal from a remote computer, the system comprising:
a means for interfacing the target computer system from the remote computer, wherein the target computer system comprises a primary directory and a secondary directory;
a means for delivering a software release to the secondary directory on the target computer system;
a means for verifying that the software release was accurately delivered to the secondary directory;
a means for customizing the delivered software release in the secondary directory;
a means for swapping the delivered software release in the secondary directory with an existing software version in the primary directory when the target computer system is rebooted; and
a means for executing a configuration program for the software release.

31. The system of claim 30 wherein the financial transaction terminal comprises an automated teller machine (ATM).

32. The system of claim 31 wherein the means for interfacing the target computer system from the remote computer comprises a means for establishing communication with the target computer system via a network.

33. The system of claim 32 wherein the means for delivering a software release to the secondary directory on the target computer system comprises means for recording the software release in the secondary directory.

34. The system of claim 33 wherein the software release comprises one of the following: an operating system and a new software version.
